# EUROPÄISCHE PATENTSCHRIFT

(11) **EP 2 185 400 B1**
(45) Veröffentlichungstag und Bekanntmachung des Hinweises auf die Patenterteilung: **27.04.2011**
(21) Anmeldenummer: 08785700.9
(22) Anmeldetag: 25.08.2008
(51) Int. Cl.: B62D 13/06, B62D 15/02, B60Q 1/48

(54) **VERFAHREN UND VORRICHTUNG ZUR FAHRERUNTERSTÜTZUNG BEIM RANGIEREN EINES FAHRZEUGES ODER FAHRZEUGGESPANNS**
METHOD AND DEVICE FOR DRIVER SUPPORT WHEN ROUTING A VEHICLE OR VEHICLE COMBINATION
PROCÉDÉ ET DISPOSITIF D'ASSISTANCE AIDANT LE CONDUCTEUR À MANOEUVRER UN VÉHICULE OU TRAIN DE VÉHICULES

(30) Priorität: 27.08.2007 DE 102007040250
(43) Veröffentlichungstag der Anmeldung: 19.05.2010
(73) Patentinhaber: Daimler AG, 70327 Stuttgart (DE)
(72) Erfinder: HAHN, Stefan, 89075 Ulm (DE); EHLGEN, Tobias, 72076 Tübingen (DE); GLASER, Markus, 70195 Stuttgart-Botnang (DE); RULAND, Thomas, 88069 Tettnang (DE)
(74) Vertreter: JENSEN & SON
(86) Internationale Anmeldenummer: PCT/EP2008/006948
(87) Internationale Veröffentlichungsnummer: WO 2009/027067

(56) Entgegenhaltungen:
- WO-A-2004/109326
- DE-A1-102005 051 804

## Beschreibung

Die Erfindung betrifft ein Verfahren und eine Vorrichtung zur Fahrerunterstützung beim Rangieren eines Fahrzeuges oder Fahrzeuggespanns, welches mehrere gegenseitig bewegbare Fahrzeugelemente aufweist.

Aus dem Stand der Technik sind verschiedene Verfahren sowie Vorrichtungen zur Fahrerunterstützung beim Rangieren von Fahrzeugen oder Fahrzeuggespannen, insbesondere von Nutzfahrzeugen, bekannt.

So erweist sich beispielsweise ein Rückwärtsfahren in Geradeausfahrt bei Fahrzeugen oder Fahrzeuggespannen, welche gegenseitig bewegbare Fahrzeugelemente aufweisen, als schwierig. Der Grund hierin liegt in Lenkbewegungen, da eine kleinste Lenkbewegung ein Ausscheren eines Anhängers ober Sattelaufliegers zur Folge hat.

Aus der DE 100 65 230 A1 ist ein gattungsgemäßes Verfahren und eine gattungsgemäße Vorrichtung zur Erleichterung des Rangierens und/oder Rückwärtsfahrens eines Fahrzeuges oder Fahrzeuggespanns benannt, wobei auf einer Anzeigeeinheit das Fahrzeug mit einem Anhänger aus einer Vogelperspektive in schematischer Darstellung angezeigt wird. Dabei umfasst die Vorrichtung eine den Lenkwinkel der lenkbaren Achse des Fahrzeuges erfassende Lenkwinkelmesseinrichtung und eine wenigstens den dem Anhänger zugewandten Nahumgebungsbereich des Fahrzeuges erfassende Überwachungseinrichtung, insbesondere Parkhilfeeinrichtung.

Der Erfindung liegt die Aufgabe zugrunde, ein verbessertes Verfahren zur Fahrerunterstützung und eine Vorrichtung zur Durchführung des Verfahrens als Rangierhilfe für einen Fahrzeugführer eines Fahrzeuges oder Fahrzeuggespanns, welches gegenseitig bewegbare Fahrzeugelemente aufweist, anzugeben.

Die Aufgabe wird erfindungsgemäß durch ein Verfahren und eine Vorrichtung zur Durchführung des Verfahrens mit den in den Ansprüchen 1 und 8 angegebenen Merkmalen gelöst. Vorteilhafte Weiterbildungen der Erfindung sind Gegenstand der Unteransprüche.

Das erfindungsgemäße Verfahren zeigt auf einer Anzeigeeinheit in einem Fahrzeug oder Fahrzeuggespann dieses, beispielsweise ein Nutzfahrzeug mit gegenseitig bewegbare Fahrzeugelementen schematisch und beispielsweise in gerader Stellung. Dabei wird in dem beispielsweise die Umrisse des Fahrzeuges oder Fahrzeuggespanns zeigenden Bild überlagernd ein die gerade Stellung der Fahrzeugelemente repräsentierendes statisches Anzeigeelement, z. B. eine Linie, ausgegeben und angezeigt. Erfindungsgemäß wird als optische Rangierhilfe für beispielsweise ein Rückwärtsfahren, insbesondere für eine Geradeaus- oder Kurvenfahrt, jedem angezeigten Fahrzeugelement ein dynamisches Anzeigeelement in Abhängigkeit einer Stellung der Fahrzeugelemente des gefahrenen Fahrzeuges oder Fahrzeuggespanns zugeordnet, das zusätzlich, insbesondere optisch den Umrissen der Fahrzeugelemente und dem statischen Anzeigeelement überlagernd ausgegeben und angezeigt wird. Dabei verläuft das statische Anzeigeelement zweckmäßigerweise in Längsausdehnung des Fahrzeuges oder Fahrzeuggespanns entlang der Mittelachse.

Die dynamischen Anzeigeelemente der jeweiligen angezeigten Fahrzeugelemente sind an einem Drehpunkt einer Verbindung der Fahrzeugelemente, beispielsweise an einem Gelenk oder einer Anhängervorrichtung, verbunden und werden um diesen Drehpunkt bei Schwenken einer der Fahrzeugelemente entsprechend geschwenkt. Dabei stellen die dynamischen Anzeigeelemente den Verlauf der Mittelachse bei zueinander geknickten Fahrzeugelementen und somit in Abhängigkeit von momentan eingestellten Lenk- und/oder Knickwinkeln dar und werden beispielsweise als eine weitere Linie in einer anderen geeigneten Linienart und/oder Liniengröße und/oder -form ausgegeben.

Mit anderen Worten: Die dynamischen Anzeigeelemente dienen der Anzeige einer momentanen Stellung und/oder einer zukünftigen Änderung der Stellung der einzelnen zueinander geknickten oder geschwenkten Fahrzeugelemente. Dabei wird in dem Bild der Anzeigeeinheit anhand der ausgegebenen statischen Anzeigeelemente das Fahrzeug oder das Fahrzeuggespann stets in gerader Stellung aller Fahrzeugelemente und anhand der ausgegebenen dynamischen Anzeigeelemente in einer momentanen und/oder einer aufgrund einer Lenkbewegung zu erwartenden, zukünftigen geschwenkten Stellung der Fahrzeugelemente angezeigt. Die dynamischen Anzeigeelemente überlagern dabei das statische, die gerade Mittelachse aller Fahrzeugelemente darstellende Anzeigeelement. Durch diese Darstellung kann ein Fahrzeugführer einen Fahrverlauf, insbesondere ein Rangieren, anhand der auf dem Bildschirm dargestellten dynamischen Anzeigeelemente und des statischen Anzeigeelements identifizieren, beurteilen und entsprechende Maßnahmen zur Änderung des Fahrverlaufs, insbesondere eines eingeschlagenen Kurvenverlaufs durchführen.

Zweckmäßigerweise erfolgt die Darstellung des in gerader Stellung gezeigten Fahrzeuges oder Fahrzeuggespanns in einem geeigneten Maßstab.

In einer weiteren Ausführungsform werden die dynamischen Anzeigeelemente vorzugsweise anhand eines erfassten momentanen Lenk- und/oder Knickwinkels angepasst und entsprechend geändert ausgegeben und angezeigt. Hierzu werden der Lenkwinkel und/oder der Knickwinkel fortlaufend erfasst. Somit ist eine aktuelle Anzeige der Stellung der Fahrzeugelemente anhand der dynamischen Anzeigeelemente durch Berücksichtigung des aktuellen Lenkwinkels und/oder des aktuellen Knickwinkels bei der Ermittlung der das Schwenken der Fahrzeugelemente repräsentierenden dynamischen Anzeigeelemente sichergestellt. Dies ist besonders vorteilhaft für eine einfache und schnelle Überwachung kurzer Rangierstrecken, wie beispielsweise ein Rückwärtsrangieren, bei welchem kleine Lenkänderungen zu einem entsprechenden Ausscheren oder Schwenken einzelner Fahrzeugelemente führen.

Weiterhin sieht das Verfahren vor, dass die aktuell erfassten Werte des Lenkwinkels und/oder des Knickwinkels einer Auswerteeinheit zugeführt und dort bei der Ermittlung der dynamischen Anzeigeelemente berücksichtigt werden. Die in Abhängigkeit vom momentanen Lenkwinkel und/oder Knickwinkel ermittelten dynamischen Anzeigeelemente werden anschließend einer Anzeigeeinheit zugeführt. Mittels der Anzeigeinheit werden dem Fahrzeugführer die dynamischen Anzeigeelemente dem statischen Anzeigeelement überlagernd auf einem während der Fahrt einsehbaren Bildschirm angezeigt. Durch die überlagernde Darstellung ist eine einfache und übersichtliche Anzeige der Änderung der Stellung der Fahrzeugelemente ermöglicht, welche dem Fahrer die Ausgangsstellung (= gerade Stellung aller Fahrzeugelemente) und eine von dieser eingenommene abweichende Momentanstellung oder zukünftige geknickte Stellung der Fahrzeugelemente anzeigt.

Für eine schnelle und sichere Erkennung von Abweichungen der Stellung der Fahrzeugelemente infolge von insbesondere kleinsten Lenkbewegungen, welche eine Auslenkung des Anhängers oder Sattelaufliegers im Fahrverlauf zur Folge hat, werden die dynamischen Anzeigeelemente, insbesondere gegenüber den Umrissen der Fahrzeugelemente und/oder dem statischen Anzeigeelement hervorgehoben ausgegeben und angezeigt. In einer möglichen Ausführungsform können die dynamischen Anzeigeelemente verstärkt, beispielsweise als verstärkte Volllinie mit größerer Breite und/oder farblich hervorgehoben ausgegeben und angezeigt werden. Dabei kann die vergrößerte und/oder farbliche Darstellung der Anzeigeelemente für die jeweiligen Fahrzeugelemente verschieden gewählt werden.

Die Vorrichtung zur Durchführung des Verfahrens ist derart ausgebildet, dass eine Anzeigeeinheit vorgesehen ist, auf der ein die gerade Stellung der Fahrzeugelemente repräsentierendes statisches Anzeigeelement und zusätzlich dieses überlagernd mindestens ein dem jeweiligen Fahrzeugelement zugeordnetes, dynamisches Anzeigeelement in Abhängigkeit einer Stellung der Fahrzeugelemente des gefahrenen Fahrzeuges oder Fahrzeuggespanns ausgebbar sind.

Dabei umfasst die Vorrichtung eine Messeinheit zur Erfassung des Lenkwinkels wenigstens einer lenkbaren Achse, eine Messeinheit zur Erfassung des Knickwinkels der gegenseitig bewegbaren Fahrzeugelemente, eine Auswerteeinheit sowie die Anzeigeeinheit. Der Auswerteeinheit werden die aktuell erfassten Werte des Lenkwinkels und/oder die aktuell erfassten Werte des Knickwinkels zur Verarbeitung und Ermittlung der Darstellung der statischen Anzeigeelemente und des dynamischen Anzeigeelementes zugeführt. Die dynamischen Anzeigeelemente werden auf der Anzeigeinheit überlagernd und hervorgehoben dargestellt und unterstützen den Fahrzeugführer beim Rangieren, insbesondere bei einem Rückwärtsfahren.

Die Messeinheit zum Erfassen des Lenkwinkels, zweckmäßigerweise zum Erfassen kleinster Lenkbewegungen, sowie die Messeinheit zur Erfassung des Knickwinkels sind bevorzugt als Positionssensoren, insbesondere Winkelsensoren in Form von magnetoresistiven Winkelsensoren oder Hallsensoren ausgebildet.

Die Auswerteeinheit dient der Verarbeitung der erfassten Werte des Lenkwinkels und des Knickwinkels. Die Auswerteeinheit ermittelt anhand des erfassten momentanen Lenkwinkels wenigstens einer lenkbaren Achse und/oder des erfassten momentanen Knickwinkels von gegenseitig bewegbaren Fahrzeugelementen zusätzlich zur vorgegebenen oder ermittelten statischen Anzeigeelement dynamische Anzeigeelemente, welche eine Auslenkung mindestens einer der gegenseitig bewegbaren Fahrzeugelemente repräsentiert.

Als Anzeigeeinheit eignet sich beispielsweise eine im Bereich des Armaturenbretts angeordnete Anzeigeeinheit, z. B. ein Bildschirm oder ein so genannter Head-up Display. Beim Head-up Display werden die anzuzeigenden Bilddaten auf im Fahrzeug oder Fahrzeuggespann vorhandene Flächen, insbesondere die Windschutzscheibe, projiziert. Eine derartige Anordnung der Anzeigeeinheit bietet den Vorteil, dass die Bildanzeige an Orten erfolgt, welche regelmäßig durch den Fahrzeugführer bei der Fahrt oder beim Rangieren eingesehen werden können.

Ausführungsbeispiele werden anhand von Zeichnungen näher erläutert.

Dabei zeigen:

Fig. 1 eine schematische Darstellung eines Fahrzeuges oder Fahrzeuggespanns mit einem statischen, in Längsausdehnung des Fahrzeuges oder Fahrzeuggespanns verlaufenden und der Mittelachse entsprechenden Anzeigeelement, und

Fig. 2 eine weitere schematische Darstellung eines Fahrzeuges in gerader Stellung mit dynamischen Anzeigeelementen.

Einander entsprechende Teile sind in allen Figuren mit den gleichen Bezugszeichen versehen.

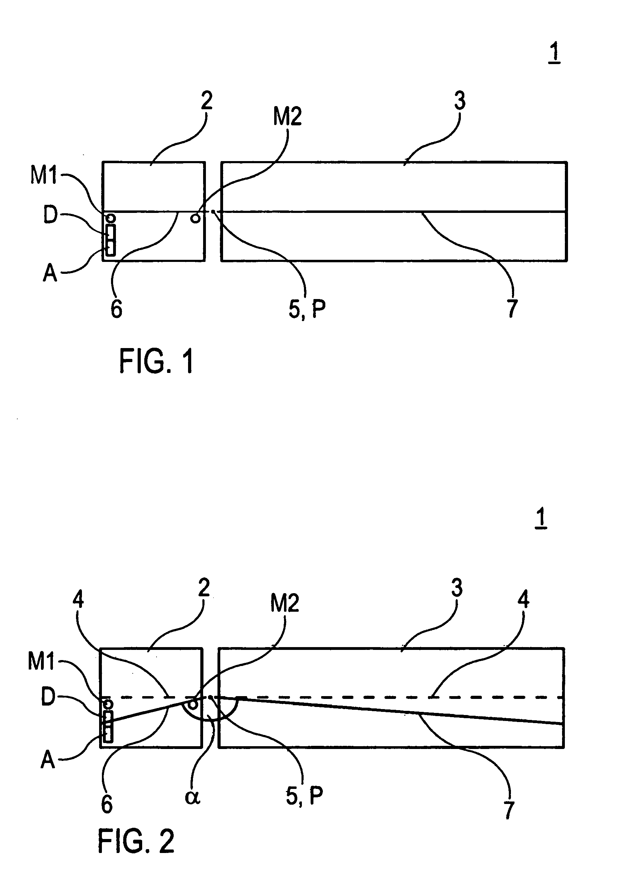

Figur 1 zeigt ein mögliches, schematisch auf einer Anzeigeeinheit A ausgegebenes Bild mit einem beispielsweise in Form von Umrissen dargestellten Fahrzeug oder Fahrzeuggespann 1 (im Weiteren kurz Fahrzeug 1 genannt). Das Bild zeigt das Fahrzeug 1 mit gegeneinander knickbaren Fahrzeugelementen 2, 3 in gerader Stellung.

Zur Kenntlichmachung der geraden Stellung aller Fahrzeugelemente 2, 3 des Fahrzeuges 1 wird in dem ausgegebenen Bild den Umrissen des Fahrzeuges 1 überlagernd ein statisches Anzeigeelement 4, z. B. wie dargestellt eine gestrichelte Linie, ausgegeben und angezeigt. Das statische Anzeigeelement 4, z. B. eine gestrichelte Linie, verläuft bevorzugt in Längsausdehnung des angezeigten Fahrzeuges 1 entlang dessen Mittelachse.

Das Fahrzeugelement 2 ist mit dem Fahrzeugelement 3 beispielsweise durch eine flexible Verbindung 5, z. B. ein Gelenk oder eine Anhängervorrichtung, verbunden. Das Fahrzeugelement 2 ist beispielsweise eine Sattelzugmaschine und das Fahrzeugelement 3 ein Sattelauflieger. Die Fahrzeugelemente 2, 3 sind dabei gegenseitig bewegbar, insbesondere um einen Drehpunkt schwenkbar gelagert. Es sind aber in Abhängigkeit der jeweiligen Verbindung auch Verschiebungen bzw. Auslenkungen in lateraler Richtung und/oder Längsrichtung möglich.

In dem Fahrzeugelement 2, welches beispielsweise die Sattelzugmaschine eines Fahrzeuges 1 ist, ist an einer geeigneten Position, insbesondere einer für den Fahrer einsehbaren Position die Anzeigeeinheit A angeordnet. Auf der Anzeigeeinheit A werden die beispielsweise in den Figuren 1 und 2 darstellten Bilder ausgegeben. Zweckmäßigerweise werden die ausgegebenen Bilder ohne Darstellung der Anzeigeeinheit A und/oder der nachfolgend beschriebenen Auswerteeinheit D und/oder Messeinheiten M1, M2 ausgegeben. D. h. auf den Bildern sind lediglich die Fahrzeugumrisse und die statischen und dynamischen Anzeigeelemente 4, 6 und 7 dargestellt.

Darüber hinaus ist mindestens eine erste Messeinheit M1, welche insbesondere als ein Positionssensor, beispielsweise ein Winkelsensor in Form eines magnetoresistiven Winkelsensors oder Hallsensors ausgebildet ist, zur Erfassung eines nicht näher dargestellten Lenkwinkels an wenigstens einer lenkbaren Achse vorgesehen. Dieser Lenkwinkel resultiert aus einer ausgeführten Lenkbewegung der Sattelzugmaschine. Weiterführend überträgt sich diese Lenkbewegung im Fahrverlauf über die flexible Verbindung 5 der Fahrzeugelemente 2, 3 auf das Fahrzeugelement 3. Diese Veränderung des Winkels zwischen den Fahrzeugelementen 2, 3 wird als Knickwinkel α von einer weiteren Messeinheit M2 erfasst. Diese Messeinheit M2 ist als ein Positionssensor, insbesondere ein Winkelsensor in Form eines magnetoresistiven Winkelsensors oder Hallsensors ausgebildet.

Beträgt der durch die erste Messeinheit M1 gemessene Lenkwinkel null, stehen die Räder wenigstens der lenkbaren Achse parallel zur Mittelachse und somit zum angezeigten, statischen, der Mittelachse entsprechenden Anzeigeelement 4. Zusätzlich wird mittels der Auswerteeinheit A anhand der Werte der Messeinheiten M1 und M2 je Fahrzeugelement 2, 3 ein oder mehrere zugehörige dynamische Anzeigeelemente 6, 7 ermittelt, welche eine mögliche Schwenkung einer oder beider Fahrzeugelemente 2, 3 anzeigen, wie dies beispielhaft in Figur 2 anhand der Volllinien dargestellt ist.

Je nach Vorgabe werden die dynamischen Anzeigeelemente 6 und 7 (z. B. Volllinien) der Fahrzeugelemente 2 und 3 gegenüber den ausgegebenen Umrissen des Fahrzeuges 1 und dem ausgegebenen statischen Anzeigeelement 4 hervorgehoben im Bild auf der Anzeigeeinheit A angezeigt. Beispielsweise werden die dynamischen Anzeigeelemente 6, 7 mit einer größeren Linienbreite, mit einer anderen Linienart, z. B. als Volllinien, und/oder farblich hervorgehoben, z. B. rot, als das statische Anzeigeelement 4 ausgegeben. In Figur 1 mit der geraden Stellung aller Fahrzeugelemente 2, 3 verlaufen die dynamischen Anzeigeelemente 6, 7 analog zum statischen Anzeigeelement 4 und somit parallel zur Mittelachse.

Zur Darstellung einer Schwenkung oder Auslenkung der gegenseitig bewegbaren Fahrzeugelemente 2, 3 sind die dynamischen Anzeigeelemente 6, 7 um einem Drehpunkt P, der der Verbindung 5 der Fahrzeugelemente 2, 3 entspricht, schwenkbar. Werden infolge einer Änderung des erfassten Lenkwinkels mindestens einer der Fahrzeugelemente 2 und 3 oder beide ausgelenkt, so überträgt sich im weiteren Fahrverlauf der Lenkwinkel über die Verbindung 5 auf eines der Fahrzeugelemente 2 oder 3 oder auf beide, wodurch das betreffende Fahrzeugelement 2 oder 3 um einen entsprechenden Knickwinkel α ausschwenkt. Zur Kenntlichmachung des Ausschwenkens einer oder aller Fahrzeugelemente 2, 3 werden in der Bilddarstellung die zugehörigen Anzeigeelemente 6 bzw. 7 um den Drehpunkt P geschwenkt ausgegeben. In Figur 1 beträgt der Knickwinkel α null. In Figur 2 sind infolge eines eingeschlagenen Lenkwinkels beide Fahrzeugelemente 2 und 3 mit einem entsprechenden Knickwinkel α ausgeschwenkt. Diese Ausschwenkung wird durch die dynamischen und entsprechend des eingestellten Lenkwinkels und/oder des erfassten momentanen Knickwinkels α um den die Verbindung 5 darstellenden Drehpunkt P geschwenkten Anzeigeelemente 6, 7 ausgegeben und angezeigt.

Im Betrieb des Fahrzeuges 1 wird bei Ausführung einer Lenkbewegung durch einen Fahrzeugfahrer des Fahrzeuges 1 fortlaufend mittels der Messeinheiten M1 und M2 sowohl der Lenkwinkel als auch der Knickwinkel α erfasst und einer Auswerteeinheit D, die beispielsweise integraler Bestandteil der Anzeigeeinheit A oder einer anderen geeigneten Steuereinheit sein kann, zugeführt. Mittels der Auswerteeinheit D wird zum einen das dem jeweiligen Fahrzeugtyp zugrunde liegende statische Anzeigeelement 4 ermittelt. Zum anderen werden die dem betreffenden Fahrzeugtyp zugrunde liegenden Umrisse ermittelt. Wie in Figur 1 bei gerader Stellung des Fahrzeuges 1 gezeigt, werden anschließend die Umrisse des Fahrzeuges 1 und das statische Anzeigeelement 4 grafisch ausgegeben. Zur Ermittlung der Stellung oder einer Änderung der Stellung der Fahrzeugelemente 2, 3 infolge einer Änderung des Lenk- und/oder Knickwinkels α während der Fahrt oder beim Rangieren des Fahrzeuges 1 werden mittels der Messeinheiten M1 und M2 fortlaufend Messwerte erfasst. Diese Messwerte werden der Auswerteeinheit D zugeführt. Diese ermittelt dann sowohl das statische Anzeigeelement 4 als auch die dynamischen Anzeigeelemente 6 und 7 und erzeugt entsprechende Signale zur Anzeige dieser auf der Anzeigeeinheit A.

Damit der Fahrer eine Änderung der Stellung Fahrzeugelemente 2 und 3 einfach, schnell und sicher identifizieren kann, werden die dynamischen Anzeigeelemente 6, 7 gegenüber dem statischen Anzeigeelement 4 grafisch hervorgehoben ausgegeben. So werden beispielsweise die dynamischen Anzeigeelemente 6, 7 bei Änderung des Lenkwinkels und eines daraus resultierenden geänderten Knickwinkels α entsprechend im bild angepasst und geändert ausgegeben. Um diese Änderung schneller wahrnehmen zu können, sind die dynamischen Anzeigeelemente 6, 7 beispielsweise farblich hervorgehoben ausgebbar. Alternativ oder zusätzlich können diese grafisch verstärkt, z. B. mit einer größeren Linienbreite, wie dargestellt, ausgegeben werden. Als Hintergrund werden weiterhin die Umrisse des Fahrzeuges 1 und das statische, die Mittelachse darstellende Anzeigeelement 4 angezeigt.

### Bezugszeichenliste

- 1: Fahrzeug oder Fahrzeuggespann
- 2: Fahrzeugelement
- 3: Fahrzeugelement
- 4: statisches Anzeigeelement
- 5: flexible Verbindung
- 6: dynamisches Anzeigeelement des Fahrzeugelements 1
- 7: dynamisches Anzeigeelement des Fahrzeugelements 2

- A: Anzeigeeinheit
- D: Auswerteeinheit
- M1: erste Messeinheit
- M2: zweite Messeinheit
- P: Drehpunkt
- α: Knickwinkel

## Patentansprüche

1. Verfahren zur Fahrerunterstützung beim Rangieren eines Fahrzeuges oder Fahrzeuggespanns (1), welches mehrere gegenseitig bewegbare Fahrzeugelemente (2, 3) aufweist, wobei auf einer Anzeigeeinheit (A) das Fahrzeug oder Fahrzeuggespann (1) mit jeweils einem dem jeweiligen Fahrzeugelement (2, 3) zugeordneten dynamischen Anzeigeelement (6, 7), das in Abhängigkeit einer momentanen oder zukünftigen Stellung der gegenseitig bewegbaren Fahrzeugelemente (2, 3) ermittelt wird, angezeigt wird,
**dadurch gekennzeichnet,**
**dass** auf der Anzeigeeinheit (A) das Fahrzeug oder Fahrzeuggespann (1) in gerader Stellung mit einem die gerade Stellung der Fahrzeugelemente (2, 3) entsprechenden statischen Anzeigeelement (4) und zusätzlich mit jeweils dem dem jeweiligen Fahrzeugelement (2, 3) zugeordneten dynamischen Anzeigeelement (6, 7) angezeigt wird, wobei das dynamische Anzeigeelement (6, 7) gegenüber dem statischen Anzeigeelement (4) hervorgehoben angezeigt wird.

2. Verfahren nach Anspruch 1,
**dadurch gekennzeichnet,**
**dass** das/die dynamische/n Anzeigeelement/e (6, 7) der momentanen oder zukünftigen Stellung der gegenseitig bewegbaren Fahrzeugelemente (2, 3) anhand eines erfassten momentanen Lenkwinkels und/oder eines erfassten momentanen Knickwinkels (α) angepasst und entsprechend geändert wird bzw. werden.

3. Verfahren nach Anspruch 2,
**dadurch gekennzeichnet,**
**dass** der Lenkwinkel und/oder der Knickwinkel (α) fortlaufend erfasst werden bzw. wird.

4. Verfahren nach Anspruch 2 oder 3,
**dadurch gekennzeichnet,**
**dass** die momentan erfassten Werte des Lenkwinkels und/oder des erfassten Knickwinkels (α) einer Auswerteeinheit (D) zugeführt werden bzw. wird.

5. Verfahren nach einem der Ansprüche 1 bis 4,
**dadurch gekennzeichnet,**
**dass** das/die dynamische/n Anzeigeelement/e (6, 7) gegenüber dem angezeigten statischen Anzeigeelement (4) farblich und/oder grafisch hervorgehoben angezeigt wird bzw. werden.

6. Verfahren nach einem der Ansprüche 1 bis 5,
**dadurch gekennzeichnet,**
**dass** das statische Anzeigeelement (4) entsprechend dem Verlauf der Mittelachse des Fahrzeuges (1) ausgegeben wird.

7. Verfahren nach einem der Ansprüche 1 bis 6,
**dadurch gekennzeichnet,**
**dass** das/die dynamische/n Anzeigeelement/e (6, 7) in der geraden Stellung der Fahrzeugelemente (2, 3) dem Verlauf der Mittelachse entsprechend angezeigt und bei zueinander, mit einem Knickwinkel (α) eingelenkten Fahrzeugelementen (2, 3) um eine der Verbindung (5) der Fahrzeugelemente (2, 3) entsprechenden Drehachse (P) geschwenkt angezeigt werden.

8. Vorrichtung zur Durchführung des Verfahrens nach einem der Ansprüche 1 bis 7,
**dadurch gekennzeichnet,**
**dass** mittels einer Anzeigeeinheit (A) das Fahrzeug oder Fahrzeuggespann (1) in gerader Stellung mit einem statischen, der geraden Stellung entsprechenden Anzeigeelement (4) und mit jeweils einem dem jeweiligen Fahrzeugelement (2, 3) zugeordneten dynamischen Anzeigeelement (6, 7), das in Abhängigkeit einer momentanen oder zukünftigen Stellung der gegenseitig bewegbaren Fahrzeugelemente (2, 3) ermittelt wird, anzeigbar ist, wobei das dynamische Anzeigeelement (6, 7) gegenüber dem statischen Anzeigeelement (4) hervorgehoben anzeigbar ist.

9. Vorrichtung nach Anspruch 8,
**dadurch gekennzeichnet,**
**dass** die dynamischen Anzeigeelemente (6, 7) der Stellung der gegenseitig bewegbaren Fahrzeugelemente (2, 3) anhand eines erfassten momentanen Lenkwinkels und/oder des Knickwinkels (α) veränderbar und anzeigbar sind.

10. Vorrichtung nach Anspruch 9,
**dadurch gekennzeichnet,**
**dass** eine erste Messeinheit (M1) den momentanen Lenkwinkel wenigstens einer lenkbaren Achse und eine weitere Messeinheit (M2) den momentanen Knickwinkel (α) wenigstens der gegenseitig bewegbaren Fahrzeugelemente (2, 3) fortlaufend erfasst.

11. Vorrichtung nach Anspruch 10,
**dadurch gekennzeichnet,**
**dass** die erste Messeinheit (M1) zur Erfassung des Lenkwinkels und/oder die zweite Messeinheit (M2) zur Erfassung des Knickwinkels (α) als ein Positionssensor, insbesondere Winkelsensor in Form von magnetoresistiven oder Hallsensoren, ausgebildet sind bzw. ist.

12. Vorrichtung nach einem der Ansprüche 8 bis 11,
**dadurch gekennzeichnet,**
**dass** die momentan erfassten Werte des Lenkwinkels und/oder des Knickwinkels (α) einer Auswerteeinheit (D) zuführbar sind.

## Claims

1. Method for driver support when manoeuvring a vehicle or a vehicle combination (1), comprising several vehicle elements (2, 3) which are movable with respect to each other, wherein the vehicle or vehicle combination (1) is displayed on a display unit (A) with dynamic display elements (6, 7) assigned to the respective vehicle elements (2, 3) and obtained in dependence on a current or future position of the vehicle elements (2, 3) which are movable with respect to each other,
**characterised in that**
the display unit (A) displays the vehicle or vehicle combination (1) in the straight position with a static display element (4) corresponding to the straight position of the vehicle elements (2, 3) and in addition with a dynamic display element (6, 7) assigned to the respective vehicle element (2, 3), wherein the dynamic display element (6, 7) is highlighted with respect to the static display element (4).

2. Method according to claim 1,
**characterised in that**
the dynamic display element(s) (6, 7) is (are) adapted to the current or future position of the vehicle elements (2, 3) which are movable with respect to each other using a detected current steering angle and/or a detected current angle of articulation (α) and is (are) changed accordingly.

3. Method according to claim 2,
**characterised in that**
the steering angle and/or the angle of articulation (α) is (are) detected continuously.

4. Method according to claim 2 or 3,
**characterised in that**
the currently detected values of the steering angle and/or the angle of articulation (α) are fed into an evaluation unit (D).

5. Method according to any of claims 1 to 4,
**characterised in that**
the dynamic display element(s) (7, 7) is (are) highlighted by means of colour and/or graphics with respect to the static display element (4).

6. Method according to any of claims 1 to 5,
**characterised in that**
the static display element (4) is output in accordance with the path of the central axis of the vehicle (1).

7. Method according to any of claims 1 to 6,
**characterised in that**
the dynamic display element(s) is (are) displayed in accordance with the path of the central axis in the straight position of the vehicle elements (2, 3) and pivoted about an axis of rotation (P) corresponding to the connection (5) of the vehicle elements (2, 3) if the vehicle elements (2, 3) are steered at an angle of articulation (α).

8. Device for carrying out the method according to any of claims 1 to 7,
**characterised in that**
by means of a display unit (A) the vehicle or the vehicle combination (1) can be displayed in the straight position by means of a static display element (4) corresponding to the straight position and by means of dynamic display elements (6, 7) assigned to the respective vehicle elements (2, 3) which are obtained in dependence on a current or future position of the vehicle elements (2, 3) which are movable with respect to each other, wherein the dynamic display element (6, 7) is highlighted with respect to the static display element (4).

9. Device according to claim 8,
**characterised in that**
the dynamic display elements (6, 7) can be changed in accordance with the position of the vehicle elements (2, 3) which are movable with respect to each other and displayed using a detected current steering angle and/or the angle of articulation (α).

10. Device according to claim 9,
**characterised in that**
a first measuring unit (M1) continuously detects the steering angle of at least one steered axle and a further measuring unit (M2) detects the current angle of articulation (α) of at least the vehicle elements (2, 3) which are movable with respect to each other.

11. Device according to claim 10,
**characterised in that**
the first measuring unit (M1) for the detection of the steering angle and/or the second measuring unit (M2) for the detection of the angle of articulation (α) is (are) designed as a position sensor, in particular an angular sensor in the form of magnetoresistive or Hall sensors.

12. Device according to any of claims 8 to 11,
**characterised in that**
the currently detected values of the steering angle and/or of the angle of articulation (α) can be fed to an evaluation unit (D).

## Revendications

1. Procédé d'assistance aidant le conducteur à manoeuvrer un véhicule ou train de véhicules (1) lequel présente plusieurs éléments véhicules (2, 3) mobiles les uns par rapport aux autres, le véhicule ou train de véhicules (1) étant affiché sur une unité d'affichage (A) avec un élément d'affichage (6, 7) dynamique associé a l'élément de véhicule (2, 3), lequel élément d'affichage est déterminé en fonction d'une position du moment ou d'une position future des éléments véhicules (2, 3) mobiles, **caractérisé en ce que** le véhicule ou train de véhicules (1) est affiché en position alignée sur une unité d'affichage (A) avec un élément d'affichage statique (4), correspondant à la position alignée des éléments véhicules (2, 3), et avec l'élément d'affichage dynamique (6, 7), associé à l'élément véhicule (2, 3), l'élément d'affichage (6, 7) dynamique étant affiché de façon à être mis en relief par rapport à l'élément d'affichage (4) statique.

2. Procédé selon la revendication 1, **caractérisé en ce que** le / les élément(s) d'affichage dynamique(s) (6, 7) de la position momentanée ou de la position future des éléments de véhicule (2, 3) mobiles l'un par rapport à l'autre est / sont adapté(s) au moyen d'un angle de braquage momentané détecté et / ou d'un angle d'inflexion (α) momentané détecté et est / sont modifié(s) de manière correspondante.

3. Procédé selon la revendication 2, **caractérisé en ce que** l'angle de braquage et / ou l'angle d'inflexion (α) est / sont détecté(s) en continu.

4. Procédé selon la revendication 2 ou 3, **caractérisé en ce que** les valeurs momentanées détectées de l'angle de braquage et / ou de l'angle d'inflexion (α) sont amenées à une unité d'évaluation (D).

5. Procédé selon l'une quelconque des revendications 1 à 4, **caractérisé en ce que** le/les éléments d'affichage (6, 7) dynamique(s) est / sont affiché(s) en couleur et / ou graphiquement de façon à être mis en relief par rapport à l'élément d'affichage statique (4).

6. Procédé selon l'une quelconque des revendications 1 à 5, **caractérisé en ce que** l'élément d'affichage (4) statique est édité en fonction du tracé de l'essieu central du véhicule (1).

7. Procédé selon l'une quelconque des revendications 1 à 6, **caractérisé en ce que** le / les élément(s) d'affichage dynamique(s) (6, 7) est / sont affiché(s) dans la position alignée des éléments de véhicule (2, 3) en fonction du tracé de l'essieu central et sont affichés de manière à pouvoir pivoter autour d'un axe rotatif (P) correspondant à la liaison (5) des éléments de véhicule (2, 3) lorsque les éléments de véhicules (2, 3) sont dirigés l'un par rapport à l'autre selon un angle d'inflexion (α)

8. Dispositif pour mettre en oeuvre le procédé selon l'une quelconque des revendications 1 à 7, **caractérisé en ce qu'**au moyen d'une unité d'affichage (A) le véhicule ou train de véhicules (1) peut être affiché dans une position alignée avec un élément d'affichage (4) statique correspondant à la position alignée et avec un élément d'affichage (6, 7) dynamique associé à l'élément de véhicule (2, 3), lequel élément d'affichage est déterminé en fonction d'une position momentanée ou future des éléments de véhicule (2, 3) mobile l'un par rapport à l'autre, l'élément d'affichage (6, 7) dynamique pouvant être affiché de manière à être mis en relief par rapport à l'élément d'affichage (4) statique.

9. Procédé selon la revendication 8, **caractérisé en ce que** les éléments d'affichage dynamiques (6, 7) de la position des éléments de véhicule (2, 3) mobiles l'un par rapport à l'autre peuvent être modifiés ou affichés au moyen d'un angle de braquage momentané détecté et / ou d'un angle d'inflexion momentané détecté (α).

10. Dispositif selon la revendication 9, **caractérisé en ce qu'**une première unité de mesure (M1) détecte en continu l'angle de braquage momentané d'un essieu directeur et une autre unité de mesure (M2) détecte en continu l'angle d'inflexion momentané (α) au moins des éléments de véhicule (2, 3) mobiles l'un par rapport à l'autre.

11. Dispositif selon la revendication 10, **caractérisé en ce que** la première unité de mesure (M1) pour la détection de l'angle de braquage et / ou la deuxième unité de mesure (M2) pour la détection de l'angle d'inflexion (α) se présente(nt) comme un capteur de position, en particulier un capteur d'angle sous la forme de capteurs magnétorésistifs ou capteur à effet Hall.

12. Procédé selon l'une quelconque des revendications 8 à 11, **caractérisé en ce que** les valeurs momentanées détectées de l'angle de braquage et / ou de l'angle d'inflexion (α) peuvent être amenées à une unité d'évaluation (D).
